# EUROPEAN PATENT APPLICATION

(11) **EP 3 203 705 A1**
(43) Date of publication of application: **09.08.2017**
(21) Application number: 15846255.6
(22) Date of filing: 03.04.2015
(51) Int. Cl.: H04L 29/08

(54) **SYNCHRONOUS DATA PROCESSING METHOD AND DEVICE**

(30) Priority: 29.09.2014 CN 201410515782
(71) Applicant: ZTE Corporation, Shenzhen, Guangdong 518057 (CN)
(72) Inventor: HAO, Peng, Shenzhen Guangdong 518057 (CN); YU, Guanghui, Shenzhen Guangdong 518057 (CN); XIE, Feng, Shenzhen Guangdong 518057 (CN); SUN, Yunfeng, Shenzhen Guangdong 518057 (CN)
(74) Representative: Novagraaf Technologies
(86) International application number: PCT/CN2015/075919
(87) International publication number: WO 2016/050042

(57) **Abstract**

A method and device for data synchronization are provided. The method includes that: signalling and/or a forwarded packet are/is sent to M+N slave Transmission Points (TPs); and downlink data synchronization is performed with the slave TPs by sending the signalling and/or the forwarded packet, wherein M slave TPs perform Packet Data Convergence Protocol (PDCP) layer data synchronization with the master TP, N slave TPs may perform PDCP/Radio Link Control (RLC)/Medium Access Control (MAC) layer data synchronization with the master TP, M>=0, N>=0 and M+N>=1. In the present disclosure, the problem of how to control data synchronization overhead on the premise of ensuring a cell virtualization effect in the related technology is solved, and an effect of flexibly regulating and controlling a number of layers which implement data synchronization according to a cell virtualization requirement to control the data synchronization overhead on the premise of ensuring the cell virtualization effect is further achieved.

## Description

### Technical Field

The present disclosure relates to the field of communications, and more particularly to a method and device for data synchronization.

### Background

The development history of mobile communications shows that cell splitting, greater bandwidth and higher spectrum efficiency are three major pillars of system capacity improvement. Therefore, "cell splitting" will be the key of achieving a purpose of capacity growth of a 5th Generation (5G) system.

A 4th Generation (4G) system obtains a cell splitting gain through a Heterogeneous Network (HetNet). In the HetNet, low-power Transmission Points (TPs) are flexibly and sparsely deployed within a coverage area of a macro cell Evolved Node B (eNodeB or eNB) to form a multilayer network formed by macro cells and small cells. The HetNet may ensure coverage, simultaneously improve cell splitting flexibility and system capacity and share service pressure of the macro cells, and may further extend coverage of the macro cells. At the end of study in 4G systems, for further improving system capacity, the 3rd Generation Partnership Project (3GPP) proposes a small cell enhancement technology and develops preliminary study in problems appearing during high-density deployment of small cells.

An Ultra Dense Network (UDN) is proposed under such a background, and it may be considered as a further evolution of a small cell enhancement technology. In the UDN, TP density is further increased, coverage of each TP is further reduced (dozens of meters and even decade meters), and each TP may serve only one or few users at the same time. Ultra-dense deployment shortens distances between the TPs and terminals (or called as User Equipments (UEs)), and may greatly reduce their transmitted power, and getting very close makes a difference between an uplink and a downlink smaller and smaller.

A mobility problem and an interference problem are two major technical problems to be solved for a UDN. Because of high TP density and narrow TP coverage, a terminal may be frequently handed over between TPs in a movement process. Frequent handover may cause high signaling pressure on the UDN to deteriorate Transport Control Protocol/Internet Protocol (TCP/IP) performance and seriously influence experiences of a user. On the other hand, high-density TP deployment may also make an interference environment of the UDN more complex and limit further capacity improvement.

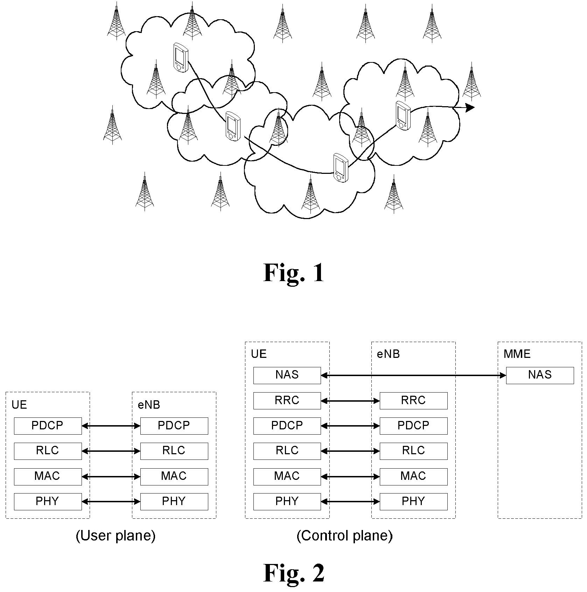

Cell virtualization is a key technology for solving the mobility and interference problems of a UDN. The core is to establish a user-centered virtual cell to enable a user to feel like being located in the center of the cell and always enjoys high-quality data communication service no matter where the user moves. The virtual cell is formed by a plurality of TPs around the user. Fig. 1 is a schematic diagram of a virtual cell in a related technology. As shown in Fig. 1, when the user moves or an ambient environment changes, there may continuously be new TPs joining the virtual cell and old TPs separated from the virtual cell, the virtual cell moves along with movement of the user or changes along with changing of the ambient environment to ensure consistency of user experiences, and such a process is called as cell forming or reforming.

In a virtual cell, each TP is required to adopt the same user data encapsulation manner to implement effective virtualization, namely implementing data Joint Transmission (JT) of each TP or flexible conversion between the TPs, to avoid user data transmission interruption. A process of reaching an agreement on the user data encapsulation manner by each TP is called as data synchronization. How to implement data synchronization is a problem urgent to be solved by a cell virtualization technology.

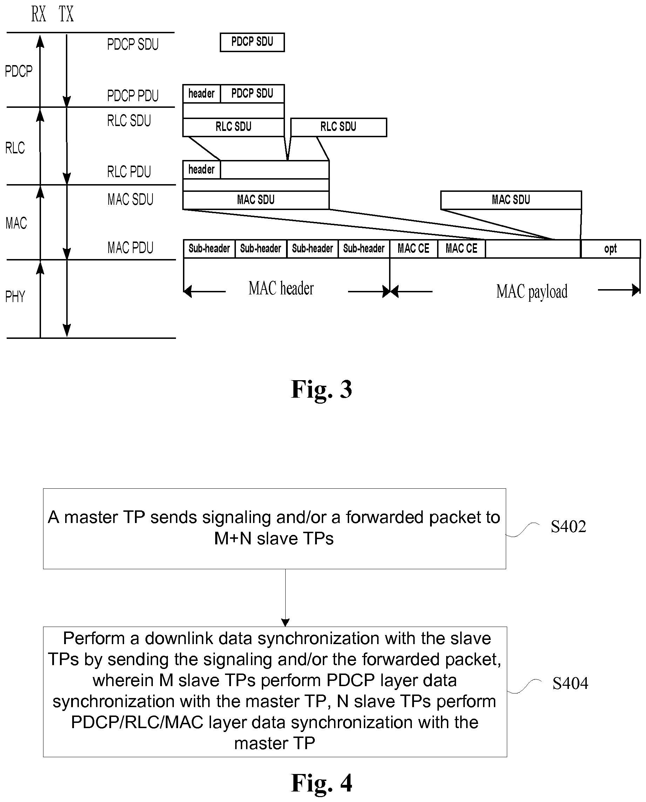

Fig. 2 is a schematic diagram of a user-plane protocol stack in the related technology. As shown in Fig. 2 (left), a user-plane protocol stack of Long Term Evolution (LTE) is formed by a Packet Data Convergence Protocol (PDCP) layer, a Radio Link Control (RLC) layer, a Medium Access Control (MAC) layer and a Physical (PHY) layer, and the PDCP layer is located in an uppermost layer, and the PHY layer is located in a lowermost layer. Fig. 3 is a schematic diagram of a Service Data Unit/Protocol Data Unit (SDU/PDU) relationship in the related technology. As shown in Fig. 3, on a sending side, a data packet transmitted to a lower layer by an upper layer is called as a PDU, and the data packet received by the lower layer from the upper layer is called as an SDU. A receiver side is the opposite. In addition, LTE also has a control plane, and its protocol stack is shown in Fig. 2 (right).

The PDCP layer is mainly responsible for IP header compression and decompression, transfer of user data, in-sequence delivery of upper layer PDUs, duplicate detection of lower layer SDUs, and retransmission of PDCU SDUs, ciphering and deciphering and timer-based SDU discard. PDCP PDUs are divided into control-plane PDCP data PDUs (bearing control-plane data), user-plane PDCP data PDUs (bearing user-plane user data) and PDCP control PDUs (bearing PDCP control information).

The RLC layer is responsible for transfer of upper layer PDUs, error correction through Automatic Repeat Request (ARQ), concatenation, segmentation and reassembly of RLC SDUs, re-segmentation of RLC data PDUs, reordering of RLC data PDUs, duplicate detection, protocol error defection, RLC SDU discard and RLC re-establishment. The MAC layer is responsible for mapping between logical channels and transport channels, multiplexing/demultiplexing of MAC SDUs, scheduling information reporting, error correction through Hybrid Automatic Repeat Request (HARQ), priority handling between logical channels of one UE, priority handling between UEs, transport format selection and the like. The PHY layer is responsible for operations of modulation/demodulation, coding/decoding, interleaving/deinterleaving, PHY signal processing and the like.

As shown in Fig. 3, an RLC PDU is formed by a header and data (or the data only). The header is configured to indicate information such as a type and length of an RLC SDU.

As shown in Fig. 3, a MAC PDU is formed by a MAC header and a MAC payload. The MAC payload is formed by a MAC Control Element (MAC CE), a MAC SDU and a padding bit (which is configured to make a length of a MAC PDU meet a specific requirement). The MAC header includes multiple sub-headers corresponding to the MAC CE, the MAC SDU and the padding bit, and is configured to indicate information (length, relative position in the MAC PDU, information type and the like) of each element (the MAC CE, the MAC SDU or the padding bit) in the MAC payload. There are multiple types of MAC CEs configured to transmit various kinds of MAC control information, such as a MAC CE configured for power headroom report, a MAC CE configured for buffer status report and a MAC CE configured to send a timing advance command.

Complete downlink data synchronization refers to implementation of synchronization between different TPs from a PDCP layer to a MAC layer, including a data packet encapsulation manner of each layer, a value of a status variable of each layer, a status of a timer and the like. Complete synchronization may also be implemented by performing data encapsulation from the PDCP layer to the MAC layer in a TP and then sending a MAC data packet to the other TPs (that is, MAC data packets in each TP are completely the same and PDCP/RLC data encapsulated in the MAC data packets is also completely the same). In a complete data synchronization state, a virtual cell may dynamically select a TP serving a terminal to achieve an optimal virtualization effect. On the other hand, each layer of a protocol stack requires additional overhead on the basis of an SDU of this layer to form a PDU to realize a function required to be supported by this layer. Thus, although a better ell virtualization effect may be achieved if more layers implement data synchronization, a data synchronization process may become more complex, and overhead for data synchronization is also higher. Therefore, how to control data synchronization overhead on the premise of ensuring the cell virtualization effect is the problem to be solved in a data synchronization designing process.

### Summary

The present disclosure provides a method for data synchronization and device, which are adopted to solve a problem about data synchronization between TPs in a cell virtualization process.

According to an aspect of the present disclosure, a method for data synchronization is provided, which may include that: a master TP sends signaling and/or a forwarded packet to M+N slave TPs; and downlink data synchronization is performed with the slave TPs by sending the signaling and/or the forwarded packet, and M slave TPs may perform PDCP layer data synchronization with the master TP, N slave TPs may perform PDCP/RLC/MAC layer data synchronization with the master TP, M>=0, N>=0 and M+N>=1.

In certain embodiments, PDCP layer data synchronization may be that the slave TPs and the master TP have the same PDCP PDU.

In certain embodiments, PDCP layer data synchronization may be performed in at least one of the following manners: a data packet forwarding manner, and the data packet forwarding manner may include that: the master TP sends the PDCP PDU to the slave TPs; and a signaling manner, which may include that: the master TP sends PDCP layer data synchronization information to the slave TPs, the data synchronization information being used for the slave TPs to encapsulate a PDCP SDU to form the PDCP PDU.

In certain embodiments, the PDCP layer data synchronization information may include at least one of: header compression information, ciphering information, a PDCP header, a PDCP data packet Sequence Number (SN), a super-frame number and a maximum data packet SN.

In certain embodiments, PDCP/RLC/MAC layer data synchronization may be that the slave TPs and the master TP have the same PDCP, RLC and MAC PDUs, or have the same MAC PDU.

In certain embodiments, that the slave TPs and the master TP have the same PDCP, RLC and MAC PDUs may be implemented in at least one of the following manners: the signaling manner, which may include that: the master TP sends data synchronization information of PDCP, RLC and MAC data to the slave TPs, the PDCP, RLC and MAC layer data synchronization information being used for the slave TPs to encapsulate PDCP, RLC and MAC SDUs to form the PDCP, RLC and MAC PDUs; and a combined signaling and packet forwarding manner, and the combined signaling and packet forwarding manner may include that: the master TP transmits the PDCP PDU to the slave TPs and sends the RLC/MAC layer data synchronization information to the slave TPs, the data synchronization information being used for the slave TPs to form the RLC and MAC PDUs, or the master TP sends the PDCP SDU to the slave TPs and sends the PDCP/RLC/MAC layer data synchronization information to the slave TPs, the data synchronization information being used for the slave TPs to form the PDCP, RLC and MAC PDUs.

In certain embodiments, at least one of the following may be included: the PDCP layer data synchronization information may include at least one of: the header compression information, the ciphering information, the PDCP header, the PDCP data packet SN, the super-frame number and the maximum data packet SN; the RLC layer data synchronization information may include at least one of: an RLC sending buffer status and an RLC PDU header; and the MAC layer data synchronization information may include at least one of: scheduling and resource allocation information, a MAC header, a MAC CE and a corresponding relationship between a sub-header in the MAC header and an SN of a MAC SDU.

In certain embodiments, PDCP/RLC/MAC layer data synchronization which is that the MAC PDU is the same may be implemented in the packet forwarding manner, including that: the master TP sends the MAC PDU to the salve TPs.

In certain embodiments, PDCP layer data synchronization may include that: the slave TPs and the master TP perform PDCP synchronization at first, and then perform RLC/MAC layer data synchronization.

In certain embodiments, after PDCP synchronization is performed, the master TP may notify the slave TPs of performing RLC/MAC layer data synchronization through signaling.

In certain embodiments, PDCP layer data synchronization may include at least one of that: the master TP indicates a node to send a data packet to the salve TPs; the master TP indicates the slave TPs to receive data from the node; and the master TP indicates the slave TPs to send data requests to the node, the slave TPs make the data sending requests to the node, and the node sends the data to the slave TPs.

In certain embodiments, when the master TP indicates the node to send the data packet to the slave TPs, the master TP may send tag information of the slave TPs to the node; when the master TP indicates the slave TPs to receive the data from the node, the master TP may send tag information of the data packet to the slave TPs; and when the master TP indicates the slave TPs to send the data requests to the node, the slave TPs send the data sending requests to the node and the node sends the data to the slave TPs, the slave TPs may send the tag information of the requested data packet to the node.

In certain embodiments, when the master TP indicates the node to send the data packet to the slave TPs, the slave TPs may detect whether the data packet from the node includes the tag information corresponding to the slave TPs or not.

In certain embodiments, the tag information of the data packet may include at least one of: a virtual cell tag, a connecting tag and a UE tag.

In certain embodiments, the node may be a Gate Way (GW) or a TP.

In certain embodiments, the TP may include at least one of: a macro eNB, a pico, a Remote Radio Head (RRH) and a femto.

According to another aspect of the present disclosure, a method for data synchronization is provided, which may include that: slave TPs receive signaling and/or forwarded packet sent by a master TP; and downlink data synchronization is performed with the master TP by receiving the signaling and/or the forwarded packet, and M slave TPs may perform PDCP layer data synchronization with the master TP, N slave TPs may perform PDCP/RLC/MAC layer data synchronization with the master TP, M>=0, N>=0 and M+N>=1.

In certain embodiments, PDCP layer data synchronization may be that the slave TPs and the master TP have the same PDCP PDU.

In certain embodiments, PDCP layer data synchronization may be performed in at least one of the following manners: a data packet forwarding manner, which may include that: the slave TPs receive the PDCP PDU sent by the master TP; and a signaling manner, which may include that: the slave TPs receive PDCP layer data synchronization information sent by the master TP, and the slave TPs encapsulate a PDCP SDU to form the PDCP PDU according to the data synchronization information.

In certain embodiments, the PDCP layer data synchronization information may include at least one of: header compression information, ciphering information, a PDCP header, a PDCP data packet SN, a super-frame number and a maximum data packet SN.

In certain embodiments, PDCP/RLC/MAC layer data synchronization may be that the slave TPs and the master TP have the same PDCP, RLC and MAC PDUs, or have the same MAC PDU.

In certain embodiments, that the slave TPs and the master TP have the same PDCP, RLC and MAC PDUs may be implemented in at least one of the following manners: the signaling manner, and the signaling manner may include that: the slave TPs receive data synchronization information of PDCP, RLC and MAC data from the master TP, and the slave TPs encapsulate PDCP, RLC and MAC SDUs to form the PDCP, RLC and MAC PDUs according to the PDCP, RLC and MAC layer data synchronization information; and a combined signaling and packet forwarding manner, and the combined signaling and packet forwarding manner may include that: the slave TPs receive the PDCP PDU and RLC/MAC layer data synchronization information transmitted by the master TP, and the slave TPs form the RLC and MAC PDUs according to the data synchronization information, or the slave TPs receive the PDCP SDU and PDCP/RLC/MAC layer data synchronization information sent by the master TP, and form the PDCP, RLC and MAC PDUs according to the data synchronization information.

In certain embodiments, at least one of the following may be included: the PDCP layer data synchronization information may include at least one of: the header compression information, the ciphering information, the PDCP header, the PDCP data packet SN, the super-frame number and the maximum data packet SN; the RLC layer data synchronization information may include at least one of: an RLC sending buffer status and an RLC PDU header; and the MAC layer data synchronization information may include at least one of: scheduling and resource allocation information, a MAC header, a MAC CE and a corresponding relationship between a sub-header in the MAC header and an SN of a MAC SDU.

In certain embodiments, PDCP/RLC/MAC layer data synchronization which is that the MAC PDU is the same may be implemented in the packet forwarding manner, including that: the slave TPs receive the MAC PDU sent by the master TP.

In certain embodiments, PDCP layer data synchronization may include that: the slave TPs and the master TP perform PDCP synchronization at first, and then perform RLC/MAC layer data synchronization.

In certain embodiments, after PDCP synchronization is performed, the slave TPs may perform RLC/MAC layer data synchronization according to a signaling notice of the master TP.

In certain embodiments, PDCP layer data synchronization may include at least one of that: the master TP indicates a node to send a data packet to the salve TPs; the master TP indicates the slave TPs to receive data from the node; and the master TP indicates the slave TPs to send data requests to the node, the slave TPs make the data sending requests to the node, and the node sends the data to the slave TPs.

In certain embodiments, the slave TPs may detect whether the data packet from the node includes own corresponding tag information or not; the slave TPs may receive the data from the node according to an indication of the master TP; and the slave TPs may make the data sending requests to the node according to an indication of the master TP, and receive the data sent by the node.

In certain embodiments, when the slave TPs receive the data from the node according to the indication of the master TP, the slave TPs may receive the data packet according to tag information of the data packet sent by the master TP; and when the slave TPs make the data sending requests to the node according to the indication of the master TP, the slave TPs may send the tag information of the data packet to the node.

In certain embodiments, the tag information of the data packet may include at least one of: a virtual cell tag, a connecting tag and a UE tag.

In certain embodiments, the node may be a GW or a TP.

In certain embodiments, the TP may include at least one of: a macro eNB, a pico, an RRH and a femto.

According to another aspect of the present disclosure, a device for data synchronization is provided, which may be located in a master TP and include: a sending module, configured to send signaling and/or a forwarded packet to M+N slave TPs; and a first synchronization module, configured to perform downlink data synchronization with the slave TPs by sending the signaling and/or the forwarded packet, and M slave TPs may perform PDCP layer data synchronization with the master TP, N slave TPs may perform PDCP/RLC/MAC layer data synchronization with the master TP, M>=0, N>=0 and M+N>=1.

According to another aspect of the present disclosure, a device for data synchronization is provided, which may be located in a slave TP and include: a receiving module, configured to receive signaling and/or forwarded packet sent by a master TP; and a second synchronization module, configured to perform downlink data synchronization with the master TP by receiving the signaling and/or the forwarded packet, and M slave TPs may perform PDCP layer data synchronization with the master TP, N slave TPs may perform PDCP/RLC/MAC layer data synchronization with the master TP, M>=0, N>=0 and M+N>=1.

In the embodiments of the present disclosure, the signaling and/or the forwarded packet is sent to the M+N slave TPs, and downlink data synchronization is performed with the slave TPs by sending the signaling and/or the forwarded packet, and the M slave TPs perform PDCP layer data synchronization with the master TP, the N slave TPs perform PDCP/RLC/MAC layer data synchronization with the master TP, M>=0, N>=0 and M+N>=1. Therefore, the problem of how to control data synchronization overhead on the premise of ensuring a cell virtualization effect in the related technology is solved, and an effect of flexibly regulating and controlling a number of layers which implement data synchronization according to a cell virtualization requirement to control the data synchronization overhead and implementation complexity on the premise of ensuring the cell virtualization effect is further achieved.

### Brief Description of the Drawings

The drawings described here are adopted to provide a further understanding to the present disclosure, and form a part of the present disclosure. Schematic embodiments of the present disclosure and descriptions thereof are adopted to explain the present disclosure.
Fig. 1 is a schematic diagram of a virtual cell in the related technology.
Fig. 2 is a schematic diagram of a user-plane protocol stack in the related technology.
Fig. 3 is a schematic diagram of an SDU/PDU relationship in the related technology.
Fig. 4 is a flowchart of a first method for data synchronization according to an embodiment of the present disclosure.
Fig. 5 is a flowchart of a second method for data synchronization according to an embodiment of the present disclosure.
Fig. 6 is a structure block diagram of a first device for data synchronization according to an embodiment of the present disclosure.
Fig. 7 is a structure block diagram of a second device for data synchronization according to an embodiment of the present disclosure.
Fig. 8 is a schematic diagram of acquiring virtual cell data by TPs through a wired backhaul according to an embodiment of the present disclosure.
Fig. 9 is a schematic diagram of a data packet SN allocation method according to an embodiment of the present disclosure.
Fig. 10 is a schematic diagram of obtaining virtual cell data to implement data synchronization by TPs in a PDCP packet forwarding manner according to an embodiment of the present disclosure.
Fig. 11 is a schematic diagram of acquiring virtual cell data through a wired backhaul and implementing data synchronization by virtue of PDCP/RLC/MAC synchronization information by TPs according to an embodiment of the present disclosure.
Fig. 12 is a schematic diagram of obtaining virtual cell data to implement data synchronization by TPs in a MAC packet forwarding manner according to an embodiment of the present disclosure.

### Detailed Description of the Embodiments

The present disclosure will be described below with reference to the drawings and the embodiments in detail. It is important to note that the embodiments in the present disclosure and characteristics in the embodiments may be combined under the condition of no conflicts.

The embodiments provide a method for data synchronization. Fig. 4 is a flowchart of a first method for data synchronization according to an embodiment of the present disclosure. As shown in Fig. 4, a flow includes the steps S402 to S404.

At Step S402: a master TP sends signaling and/or a forwarded packet to M+N slave TPs.

At Step S404: downlink data synchronization is performed with the slave TPs by sending the signaling and/or the forwarded packet, and M slave TPs perform PDCP layer data synchronization with the master TP, N slave TPs perform PDCP/RLC/MAC layer data synchronization with the master TP, M>=0, N>=0 and M+N>=1.

By the steps, in a manner of sending the signaling and/or the forwarded packet, the M slave TPs perform PDCP layer data synchronization with the master TP, the N slave TPs perform PDCP/RLC/MAC layer data synchronization with the master TP, and a data synchronization layer may be determined according to an interference problem of a network, so that the problem of how to control data synchronization overhead on the premise of ensuring a cell virtualization effect in the related technology is solved, and an effect of flexibly regulating and controlling a number of layers which implement data synchronization according to a cell virtualization requirement to control the data synchronization overhead and implementation complexity on the premise of ensuring the cell virtualization effect is further achieved.

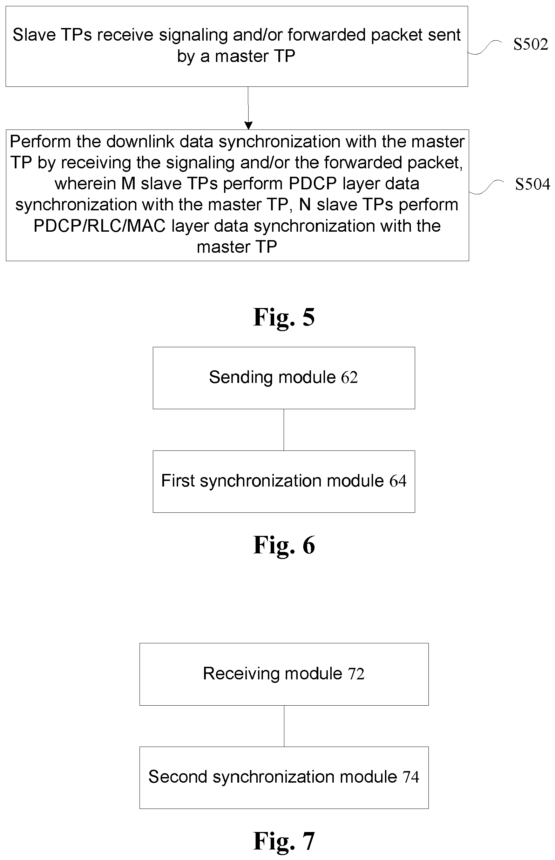

Fig. 5 is a flowchart of a second method for data synchronization according to an embodiment of the present disclosure. As shown in Fig. 5, a flow includes the steps S502 to S504.

At Step S502: slave TPs receive signaling and/or forwarded packet sent by a master TP.

At Step S504: downlink data synchronization is performed with the master TP by receiving the signaling and/or the forwarded packet, and M slave TPs perform PDCP layer data synchronization with the master TP, N slave TPs perform PDCP/RLC/MAC layer data synchronization with the master TP, M>=0, N>=0 and M+N>=1.

By the steps, downlink data synchronization is performed with the master TP by receiving the signaling and/or the forwarded packet, the M slave TPs perform PDCP layer data synchronization with the master TP, the N slave TPs perform PDCP/RLC/MAC layer data synchronization with the master TP, and a data synchronization layer may be determined according to an interference problem of a network, so that the problem of high overhead during data synchronization in the related technology is solved, and an effect of effectively reducing the high overhead during data synchronization is further achieved.

The embodiments further provide a device for data synchronization, which is configured to implement the abovementioned embodiments and preferred implementation modes, and what has been described will not be elaborated. For example, term "module", used below, may be a combination of software and/or hardware capable of realizing a preset function. Although the device described in the following embodiment is in certain embodiments implemented with software, implementation with hardware or a combination of the software and the hardware is also possible and conceivable.

Fig. 6 is a structure block diagram of a first device for data synchronization according to an embodiment of the present disclosure. As shown in Fig. 6, the device is located in a master TP, and includes: a sending module 62 and a first synchronization module 64. The device will be described below.

The sending module 62 is configured to send signaling and/or a forwarded packet to M+N slave TPs; and the first synchronization module 64 is connected to the sending module 62, and is configured to perform downlink data synchronization with the slave TPs by sending the signaling and/or the forwarded packet, and M slave TPs perform PDCP layer data synchronization with the master TP, N slave TPs perform PDCP/RLC/MAC layer data synchronization with the master TP, M>=0, N>=0 and M+N>=1.

Fig. 7 is a structure block diagram of a second device for data synchronization according to an embodiment of the present disclosure. As shown in Fig. 7, the device is located in a slave TP, and includes: a receiving module 72 and a second synchronization module 74. The device will be described below.

The receiving module 72 is configured to receive signaling and/or forwarded packet sent by a master TP; and the second synchronization module 74 is connected to the receiving module 72, and is configured to perform downlink data synchronization with the master TP by receiving the signaling and/or the forwarded packet, and M slave TPs perform PDCP layer data synchronization with the master TP, N slave TPs perform PDCP/RLC/MAC layer data synchronization with the master TP, M>=0, N>=0 and M+N>=1.

By the solutions for data synchronization between the TPs in a cell virtualization process provided by the abovementioned embodiments and preferred implementation modes, the number of the layers which implement data synchronization may be flexibly regulated and controlled according to the cell virtualization requirement to control the data synchronization overhead and the implementation complexity on the premise of ensuring the cell virtualization effect.

The solutions will be described below.

Descriptions will be made by combining a master TP and slave TPs.

The method includes that: M+N+1 TPs which have downlink data of a terminal perform downlink data synchronization, and a master TP and M+N slave TPs are included. In the slave TPs, M slave TPs perform PDCP layer data synchronization with the master TP, and N slave TPs perform PDCP/RLC/MAC layer data synchronization with the master TP. M>=0, N>=0 and M+N>=1.

The PDCP layer data synchronization refers to that the slave TPs and the master TP have the same PDCP PDU.

There may be multiple manners for PDCP layer data synchronization. For example, PDCP layer data synchronization may be implemented in a data packet forwarding manner, including that: the master TP sends the PDCP PDU to the slave TPs. PDCP layer data synchronization may also be implemented in a signaling manner, including that: the master TP sends PDCP layer data synchronization information to the slave TPs, and the salve TPs encapsulate a PDCP SDU to form the PDCP PDU according to the data synchronization information.

The PDCP layer data synchronization information includes, but not limited to, at least one of: header compression information, ciphering information, a PDCP header, a PDCP data packet SN, a super-frame number and a maximum data packet SN.

PDCP/RLC/MAC layer data synchronization refers to that the slave TPs and the master TP have the same PDCP, RLC and MAC PDUs, or have the same MAC PDU.

There may also be multiple manners for PDCP/RLC/MAC layer data synchronization. For example, PDCP/RLC/MAC layer data synchronization which is that the PDCP, RLC and MAC PDUs are the same may be implemented in the signaling manner, specifically including that: the master TP sends data synchronization information of PDCP, RLC and MAC data to the slave TPs, and the slave TPs encapsulate PDCP, RLC and MAC SDUs to form the PDCP, RLC and MAC PDUs according to the PDCP, RLC and MAC layer data synchronization information.

The PDCP/RLC/MAC layer data synchronization is that the PDCP, RLC and MAC PDUs are the same may also be implemented in a combined signaling and packet forwarding manner, including that: the master TP transmits the PDCP PDU to the slave TPs and sends the RLC/MAC layer data synchronization information to the slave TPs, and the slave TPs form the RLC and MAC PDUs according to the data synchronization information, or the master TP sends the PDCP SDU to the slave TPs and sends the PDCP/RLC/MAC layer data synchronization information to the slave TPs, and the slave TPs form the PDCP, RLC and MAC PDUs according to the data synchronization information.

The PDCP layer data synchronization information includes, but not limited to, at least one of: the header compression information, the ciphering information, the PDCP header, the PDCP data packet SN, the super-frame number and the maximum data packet SN.

The RLC layer data synchronization information includes, but not limited to, at least one of: an RLC sending buffer status and an RLC PDU header.

The MAC layer data synchronization information includes, but not limited to, at least one of: scheduling and resource allocation information (such as time and frequency locations of a resource, an adopted modulation and coding scheme, redundancy version information, a progress SN and precoding information), a MAC header, a MAC CE and a corresponding relationship between a sub-header in the MAC header and an SN of a MAC SDU (i.e. an RLC PDU).

The PDCP/RLC/MAC layer data synchronization is that the MAC PDU is the same, which is implemented in the packet forwarding manner, specifically including that: the master TP sends the MAC PDU to the salve TPs.

PDCP layer data synchronization includes that: the slave TPs and the master TP perform PDCP synchronization at first, and then perform RLC/MAC layer data synchronization.

It is important to note that: after PDCP synchronization is performed, the master TP notifies the slave TPs of performing RLC/MAC layer data synchronization through signaling.

In addition, the TP includes, but not limited to: an eNB, a pico, an RRH and a femto.

There may also be multiple data transmission manners for synchronization between the master TP and the slave TPs. For example, the following manners may be adopted: the master TP indicates a node to send a data packet to the salve TPs; or the master TP indicates the slave TPs to receive data from the node; or the master TP indicates the slave TPs to send data requests to the node, the slave TPs make the data sending requests to the node, and the node sends the data to the slave TPs.

When the master TP indicates the node to send the data of the terminal to the other slave TPs, tag information of the slave TPs is sent to the node, and the slave TPs detect whether the data packet from the node includes own corresponding tag information or not; when the master TP indicates the slave TPs to receive the data from the node, the master TP sends related tag information of the data packet to the slave TPs, and the "related tag information of the data packet" is at least one of: a virtual cell tag, a connecting tag and a terminal tag; and when the master TP indicates the slave TPs to send the data sending requests to the node, the slave TPs send the related tag information of the requested data packet to the node, and the "related tag information of the data packet" is at least one of: the virtual cell tag, the connecting tag and the terminal tag.

It is important to note that the node is a GW or a TP.

The data synchronization solution will be described on the basis of a master TP configured for data synchronization.

In a manner of sending signaling and/or a forwarded packet, the master TP causes M slave TPs to implement PDCP downlink data synchronization with it, and causes N slave TPs to implement PDCP/RLC/MAC downlink data synchronization with it. M>=0, N>=0 and M+N>=1.

PDCP layer data synchronization refers to that the slave TPs and the master TP have the same PDCP PDU.

Correspondingly, there may be multiple manners for PDCP layer data synchronization. For example, a data packet forwarding manner may be adopted for implementation, specifically including that: the master TP sends the PDCP PDU to the slave TPs. For another example, PDCP layer data synchronization may also be implemented in a signaling manner, specifically including that: the master TP sends PDCP layer data synchronization information to the slave TPs.

The PDCP layer data synchronization information includes, but not limited to, at least one of: header compression information, ciphering information, a PDCP header, a PDCP data packet SN, a super-frame number and a maximum data packet SN.

PDCP/RLC/MAC layer data synchronization refers to that the slave TPs and the master TP have the same PDCP, RLC and MAC PDUs, or have the same MAC PDU. Similarly, PDCP/RLC/MAC layer data synchronization may also adopt multiple manners, which will be described below with examples.

For example, PDCP/RLC/MAC layer data synchronization which is that the PDCP, RLC and MAC PDUs are the same is implemented in the signaling manner, including that: the master TP sends PDCP, RLC and MAC layer data synchronization information to the slave TPs. For another example, PDCP/RLC/MAC layer data synchronization which is that the PDCP, RLC and MAC PDUs are the same is implemented in a combined signaling and packet forwarding manner, including that: the master TP transmits the PDCP PDU to the slave TPs and sends the RLC/MAC layer data synchronization information to the slave TPs, or the master TP sends the PDCP SDU to the slave TPs and sends the PDCP/RLC/MAC layer data synchronization information to the slave TPs.

The PDCP layer data synchronization information includes, but not limited to, at least one of: the header compression information, the ciphering information, the PDCP header, the PDCP data packet SN, the super-frame number and the maximum data packet SN.

The RLC layer data synchronization information includes, but not limited to, at least one of: an RLC sending buffer status and an RLC PDU header.

The MAC layer data synchronization information includes, but not limited to, at least one of: scheduling and resource allocation information (such as time and frequency locations of a resource, an adopted modulation and coding scheme, redundancy version information, a progress SN and precoding information), a MAC header, a MAC CE and a corresponding relationship between a sub-header in the MAC header and an SN of a MAC SDU (i.e. an RLC PDU).

The PDCP/RLC/MAC layer data synchronization is that the MAC PDU is the same, which is implemented in the packet forwarding manner, specifically including that: the master TP sends the MAC PDU to the salve TPs.

PDCP layer data synchronization specifically includes that: the slave TPs and the master TP perform PDCP synchronization at first, and then perform RLC/MAC layer data synchronization.

After PDCP synchronization is performed, the master TP notifies the slave TPs of performing RLC/MAC layer data synchronization through signaling.

The TP includes, but not limited to: an eNB, a pico, an RRH and a femto.

The master TP indicates a node to send data of a terminal to the other salve TPs; or the master TP indicates the slave TPs to receive data from the node; or the master TP indicates the slave TPs to send data requests to the node.

When the master TP indicates the node to send the data of the terminal to the other slave TPs, the master TP sends tag information of the slave TPs to the node; and when the master TP indicates the slave TPs to receive the data from the node, the master TP sends related tag information of the data packet to the slave TPs.

The related tag information of the data packet may be at least one of: a virtual cell tag, a connecting tag and a terminal tag, and the node is a GW or a TP.

The data synchronization solution will be described on the basis slave TPs configured for data synchronization.

The M+N slave TPs implement downlink data synchronization with a master TP by receiving signaling sent by the master TP and/or a packet forwarded by the master TP, and M slave TPs perform PDCP layer data synchronization with the master TP, and N slave TPs perform PDCP/RLC/MAC layer data synchronization with the master TP. M>=0, N>=0 and M+N>=1.

PDCP layer data synchronization refers to that the slave TPs and the master TP have the same PDCP PDU. Correspondingly, multiple manners may be adopted for PDCP layer data synchronization. For example, PDCP layer data synchronization is implemented in a data packet forwarding manner, including that: the slave TPs receive the PDCP PDU sent by the master TP. For another example, PDCP layer data synchronization is implemented in a signaling manner, specifically including that: the slave TPs receive signaling related to data synchronization information sent by the master TP, and encapsulate a PDCP SDU to form the PDCP PDU according to the data synchronization information.

The PDCP layer data synchronization information includes, but not limited to, at least one of: header compression information, ciphering information, a PDCP header, a PDCP data packet SN, a super-frame number and a maximum data packet SN. PDCP/RLC/MAC layer data synchronization refers to that the slave TPs and the master TP have the same PDCP, RLC and MAC PDUs, or have the same MAC PDU. PDCP/RLC/MAC layer data synchronization which is that the PDCP, RLC and MAC PDUs are the same is implemented in the signaling manner, specifically including that: the slave TPs receive PDCP, RLC and MAC layer data synchronization information from the master TP, and form the PDCP, RLC and MAC PDUs according to the data synchronization information.

The PDCP/RLC/MAC layer data synchronization is that the PDCP, RLC and MAC PDUs are the same, it may be implemented in a combined signaling and packet forwarding manner, including that: the slave TPs receive the PDCP PDU and RLC/MAC layer data synchronization information sent by the master TP, and form the RLC and MAC PDUs according to the data synchronization information, or the slave TPs receive the PDCP SDU and PDCP/RLC/MAC layer data synchronization information sent by the master TP, and form the PDCP, RLC and MAC PDUs according to the data synchronization information.

The PDCP layer data synchronization information includes, but not limited to, at least one of: the header compression information, the ciphering information, the PDCP header, the PDCP data packet SN, the super-frame number and the maximum data packet SN; the RLC layer data synchronization information includes, but not limited to, at least one of: an RLC sending buffer status and an RLC PDU header; and the MAC layer data synchronization information includes, but not limited to, at least one of: scheduling and resource allocation information (such as time and frequency locations of a resource, an adopted modulation and coding scheme, redundancy version information, a progress SN and pre-coding information), a MAC header, a MAC CE and a corresponding relationship between a sub-header in the MAC header and an SN of a MAC SDU (i.e. an RLC PDU).

The PDCP/RLC/MAC layer data synchronization which is that the MAC PDU is the same is implemented in the packet forwarding manner, specifically including that: the slave TPs receive the MAC PDU sent by the master TP.

PDCP layer data synchronization specifically includes that: the slave TPs and the master TP perform PDCP synchronization at first, and then perform RLC/MAC layer data synchronization.

It is important to note that: after PDCP synchronization is performed, the slave TPs perform RLC/MAC layer data synchronization according to signaling of the master TP, and the TP includes, but not limited to: an eNB, a pico, an RRH and a femto.

Multiple manners may be adopted in a data synchronization process. For example, the slave TPs detect whether a data packet from a node includes own corresponding tag information or not; or the slave TPs receive data from the node according to an indication of the master TP; or the slave TPs make data sending requests to the node according to an indication of the master TP, and receive the data sent by the node.

When the slave TPs receive the data from the node according to the indication of the master TP, the slave TPs receive the data packet according to tag information of the data packet sent by the master TP, the "related tag information of the data packet" being at least one of: a virtual cell tag, a connecting tag and a terminal tag.

When the slave TPs make the data sending requests to the node according to the indication of the master TP, the slave TPs send the related tag information of the data packet to the node. Correspondingly, the related tag information of the data packet is at least one of: the virtual cell tag, the connecting tag and the terminal tag. The node is a GW or a TP.

By the abovementioned embodiments and preferred implementation modes, a problem about data synchronization between TPs in a 5G UDN is solved, and the following advantages are achieved.

A data synchronization manner for the TPs may be flexibly selected to achieve a better compromise between performance and overhead as well as synchronization complexity according to the problem a virtual cell is confronted with.

In case of unserious network interference, the virtual cell mainly solves a mobility problem of a terminal, and at this moment, the TPs of the virtual cell are only required to implement PDCP layer data synchronization. Therefore, the mobility problem is solved, and meanwhile, overhead caused by RLC/MAC synchronization is reduced.

In case of serious network interference, the virtual cell is required to solve an interference problem. At this moment, the TPs of the virtual cell are required to implement PDCP/RLC/MAC synchronization to implement signal Joint Processing (JP) between the TPs to achieve a better interference suppression effect.

A number of the TPs which are required to perform PDCP layer data synchronization to solve the mobility problem may be different from a number of the TPs which are required to perform PDCP/RLC/MAC layer data synchronization to solve the interference problem. Part of nodes may implement PDCP layer data synchronization, while part of nodes may implement RLC/MAC layer data synchronization on the basis of PDCP synchronization or directly perform MAC layer data synchronization according to a requirement (such as an interference suppression requirement). The nodes which implement MAC layer data synchronization may be configured to perform signal JP to solve the interference problem, and the TPs which implement PDCP layer data synchronization may be configured to solve the mobility problem. The mobility/interference problem is reduced, and meanwhile, the overhead is reduced.

A data method may be selected according to characteristics of the TPs: when the TPs may directly acquire user data from a GW, a signaling-based data synchronization manner may be selected. Such a manner reduces overhead caused by direct data packet forwarding of the master TP. When the TPs may not directly acquire the user data from the GW or there are rich link resources between the TPs, the master TP may forward the data packet to implement data synchronization. The method simultaneously implements RLC and MAC layer data synchronization, ensures that an RLC layer may perform data encapsulation according to a scheduling and resource allocation condition of a MAC layer, and improves working efficiency of a system.

In addition, the method also reduces a data volume between the TPs, and further reduces use of the link (forward transmission link) resources between the TPs. Therefore, when forward transmission links and access links (links between the TPs and the terminal) share frequency resources, the interference between the forward transmission links and the access links may further be reduced.

The embodiments of the present disclosure will be described below with reference to the drawings.

### Embodiment one

A method for acquiring a data packet from a GW (or GW) by a TP in a virtual cell will be described below with an example.

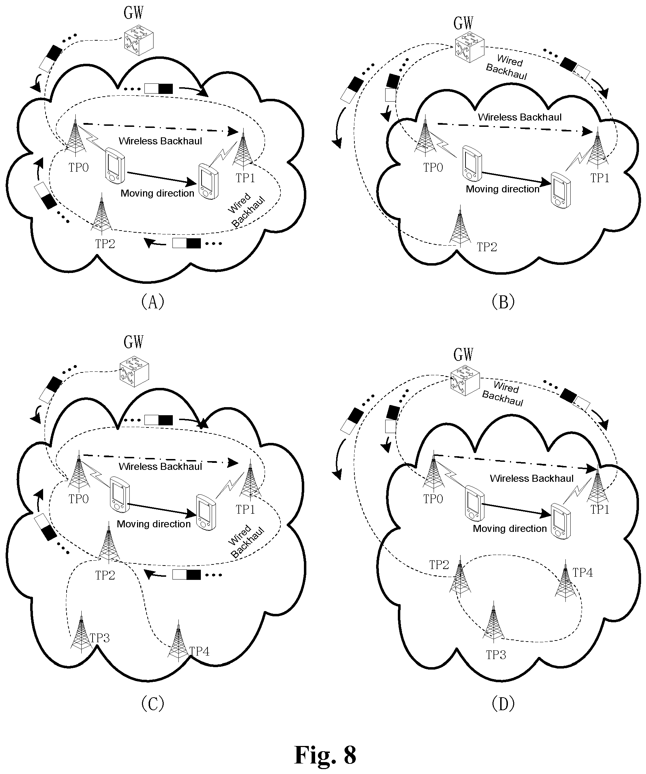

Fig. 8 is a schematic diagram of acquiring virtual cell data by TPs through a wired backhaul according to an embodiment of the present disclosure. As shown in Fig. 8, transmission points TP0, TP1 and TP2 (shown in Figs. 8-(A) and 8-(B)) or transmission points TP1, TP2, TP3 and TP4 (shown in Figs. 8-(C) and 8-(D)) form a virtual cell of a terminal, and obtain data from a GW through a wired backhaul, and TP0 is a master TP, and may obtain the data through the GW.

For a ring network structure shown in Fig. 8-(A), a data packet from the GW is on a "ring" formed by each TP. TP0 transmits receiving information of the data packet from the GW to TP1 and TP2 through an interface between the TPs, and then TP1 and TP2 may recognize or receive data belonging to the virtual cell. The interface between the TPs may be implemented through a wireless backhaul or the wired backhaul which connects each TP. The receiving information of the data packet includes (but not limited to) address information or tag information of the data packet. Each TP recognizes whether the data packet belongs to the terminal served by the virtual cell or not by virtue of the information.

For a star network structure shown in Fig. 8-(B), each TP acquires the data from the GW. TP0 sends tag information (such as address information or tags of the TPs) of TP1 and TP2 to the GW, and then the GW simultaneously sends the data packet corresponding to the virtual cell to TP0, TP1 and TP2. Or, after TP0 notifies TP1 and TP2 of acquiring the data packet of the virtual cell from the GW, TP1 and TP2 make requests to the GW, and the GW sends data of the virtual cell to TP1 and TP2.

For a hybrid network structure shown in Fig. 8-(C) or 8-(D), the data may be acquired through a node connected to the GW. For example, in the network structure shown in Fig. 8-(C), after TP3/TP4 join in the virtual cell, TP0 may notify TP2 of sending the data to TP3/TP4. For the hybrid network structure shown in Fig. 8-(D), TP0 may send the tag information of the data packet to TP3/TP4, and TP3/TP4 receives the data packet through an environment network connected with TP2.

A method for implementing PDCP layer data synchronization by the TPs through signaling in the wireless backhaul will be described below with an example.

TP0 sends configuration information configured for PDCP layer data synchronization to the other TPs in the virtual cell in a manner of broadcast signaling or terminal dedicated signaling. The configuration information includes (for example, for a user-plane PDCP data PDU): PDCP header compression configuration information (such as an adopted header compression algorithm), ciphering/deciphering configuration information (such as a key), a PDCP data packet SN length and data packet SN synchronization related information (referring to descriptions in an SN synchronization method). TP1 and TP2 perform operations such as ciphering, header compression and PDU header addition on the data packet to form a PDCP PDU according to the information. Or, TP0 sends the header compression configuration information, the ciphering/deciphering configuration information and a PDCP PDU header to TP1 and TP2 (or TP1, TP2, TP3 and TP4). TP1 and TP2 (or TP1, TP2, TP3 and TP4) directly adds the header to form the PDCP PDU after performing ciphering and header compression on a PDCP SDU.

If the data packet is not transmitted after being cached for a certain time, the TPs may perform discard processing to control a data rate of a TCP layer. Such an operation is usually implemented by virtue of a DiscardTimer. That is, when every data packet arrives, an initial value is set for a DiscardTimer of the data packet. The DiscardTimer is progressively reduced with the time, and when the DiscardTimer is reduced to be 0, the TPs discards the corresponding packet.

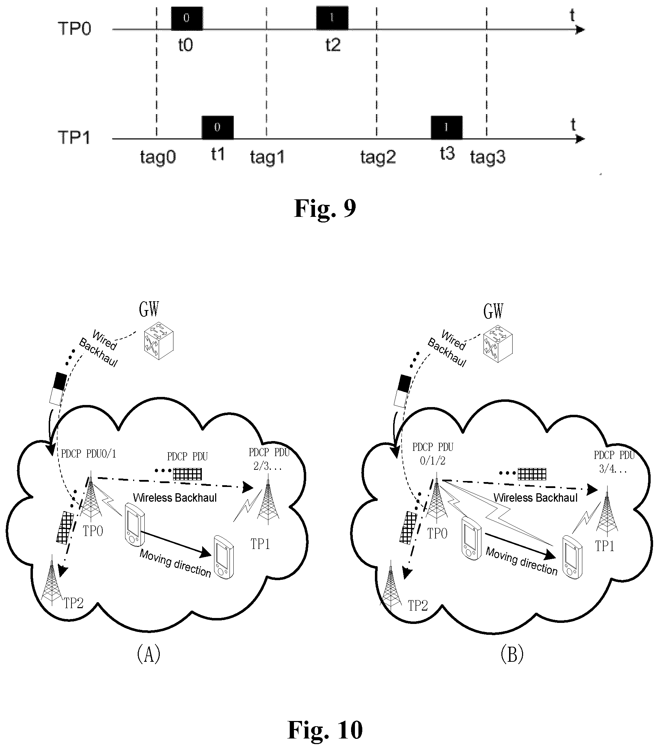

A method will be introduced below to ensure synchronization of each TP in terms of discard operation. Fig. 9 is a schematic diagram of a data packet SN allocation method according to an embodiment of the present disclosure. As shown in Fig. 9, each arriving data packet corresponds to a tag on a time axis, and although the data packets arrive at different TPs at different times, the DiscardTimers start timing according to the tags of each packet. For example, the DiscardTimer of the first packets of TP1 and TP2 start timing at a location of tag1.

The SN synchronization method includes that: (1) TP0 indicates an SN of a data packet, all the TPs allocate the SN to a PDCP PDU formed by the data packet, and thereafter, every time when a data packet is received, the SN is automatically progressively decreased; and (2) each arriving data packet corresponds to a tag on a time axis, and each tag on the time axis corresponds to an SN. As shown in Fig. 9, the data packets 0 of TP0 and TP1 arrives at times t0 and t1 respectively, corresponds to tag0 and is allocated with an SN 0. A data packet 1 of TP0 arrives at time t2, corresponds to tag1 and is allocated with an SN 1. The data packet 1 of TP1 arrives at time t3, and corresponds to tag2, and because there is no data packet between tag1 and tag2, the data packet 1 of TP1 corresponds to tag2, and is allocated with the SN 1.

How to solve the mobility problem by a virtual cell formed by TPs which implement PDCP layer data synchronization will be described below with an example.

For example, as shown in Fig. 8-(A), the terminal moves from a location close to TP0 to TP1. P0, TP1 and TP2 implements the PDCP layer data synchronization, and PDU0, PDU1, PDU2, PDU3, PDU4 etc. are completely the same. When a signal of TP0 is stronger, TP0 provides data service for the terminal, PDCP PDU0 and PDU1 have been completely transmitted, and PDCP PDU2 is being transmitted. When a signal of TP1 is stronger, TP0 resets own RLC/MAC layer, and indicates an RLC/MAC layer of the terminal to be reset (including RLC/MAC parameter resetting and discard of an RLC/MAC data packet related to PDCP PDU2). TP0 indicates TP1 to continue transmitting PDCP PDU2. TP1 encapsulates PDCP PDU2 according to own RLC/MAC configuration parameter, and starts sending data to the terminal. In addition, TP0 may also notify TP1 of becoming a new master TP at this moment.

### Embodiment two

Fig. 10 is a schematic diagram of obtaining virtual cell data to implement data synchronization by TPs in a PDCP packet forwarding manner according to an embodiment of the present disclosure. As shown in Fig. 10, transmission points P0, TP1 and TP2 (as shown in Fig. 10) form a virtual cell of a terminal. TP0 is a master TP, and obtains data from a GW through a wired backhaul (TP1 and TP2 may be connected with the GW through the wired backhaul, and may also not be connected with the GW). TP0 encapsulates the data from the GW in a PDCP layer to form a PDCP PDU. TP0 sends the PDCP PDU to TP1 and TP2 to implement data synchronization between TP0, TP1 and TP2 by virtue of a wireless backhaul.

TP0 may forward a data packet in a broadcast manner, and may also send the data packet to TP1 and TP2 in a unicast manner respectively.

As shown in Fig. 10-(A), the terminal moves from a location close to TP0 to TP1. P0, TP1 and TP2 implement the PDCP layer data synchronization, and PDU0, PDU1, PDU2, PDU3, PDU4 etc. are completely the same. When a signal of TP0 is stronger, TP0 provides data service for the terminal, PDCP PDU0/1 have been completely transmitted, and PDCP PDU2 is being transmitted. When a signal of TP1 is stronger, TP0 resets own RLC/MAC layer, and indicates an RLC/MAC layer of the terminal to be reset. That is, an RLC/MAC parameter is reset, and an RLC/MAC data packet related to PDCP PDU2 is discarded. TP0 indicates TP1 to continue transmitting PDCP PDU2. TP1 encapsulates PDCP PDU2 according to own RLC/MAC configuration parameter, and starts sending data to the terminal. In addition, TP0 may also notify TP1 of becoming a new master TP at this moment.

In the example shown in Fig. 10-(A), RLC/MAC layer resetting causes the problem that the data packet which is being transmitted is discarded and is required to be retransmitted by TP1. This problem may cause resource waste and prolong a data packet transmission delay. Under the condition of higher data rate, this problem may seriously influence system performance. Another possible solution is shown in Fig. 10-(B), and TP0 performs RLC/MAC layer resetting after completing transmission of PDCP PDU2. In a transmission process of PDCP PDU2, the terminal may establish a connection with TP1 and create a new RLC/MAC entity to start transmitting PDCP PDU3.

### Embodiment three

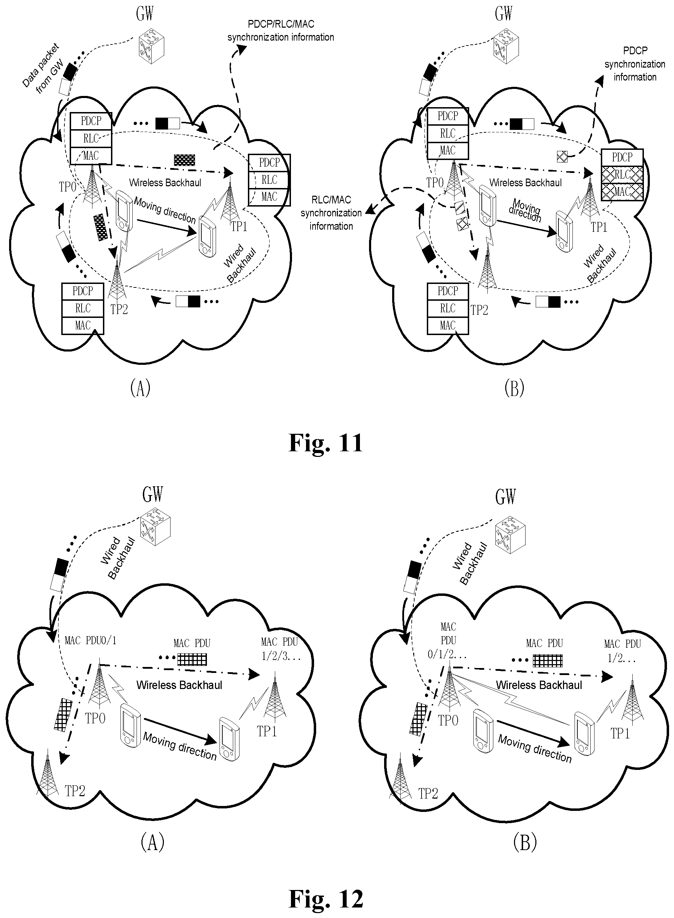

Fig. 11 is a schematic diagram of acquiring virtual cell data through a wired backhaul and implementing data synchronization by virtue of PDCP/RLC/MAC synchronization information by TPs according to an embodiment of the present disclosure. As shown in Fig. 11, transmission points TP0, TP1 AND TP2 form a virtual cell of a terminal, and obtain data from a GW through a wired backhaul (a ring network structure is taken as an example, and other network structures and a GW data acquisition method are the same as Embodiment one), and TP0 is a master TP.

Two methods for implementing PDCP/RLC/MAC layer data synchronization will be introduced below.

A first method: each TP simultaneously implements PDCP/RLC/MAC synchronization, as shown in Fig. 11-(A).

TP0 sends PDCP/RLC/MAC layer data synchronization information (sent in a broadcast manner or respectively sent to TP1 and TP2) to TP1 and TP2 in the virtual cell. TP1 and TP2 complete data synchronization in corresponding layers with TP0 according to the information. A specific method is as follows.
(1) The PDCP synchronization information and a corresponding data synchronization method refer to Embodiment one.
(2) The RLC information includes (for example, in an Unacknowledged Mode (UM)): a sending buffer status and an RLC PDU header. TP1 and TP2 update own sending buffers according to the sending buffer status of TP0. TP1 and TP2 extract RLC SDUs from respective sending buffers according to the data synchronization information indicated by the RLC PDU header of TP0, and perform segmentation/concatenation and header addition on the RLC SDUs for encapsulation into the RLC PDU.
(3) The MAC information includes:
   for a MAC PDU for first transmission: scheduling and resource allocation information (such as time and frequency locations of a resource, an adopted modulation and coding scheme, redundancy version information, a progress SN and precoding information), a MAC header, a MAC CE and a corresponding relationship between a sub-header in the MAC header and an SN of a MAC SDU (i.e. an RLC PDU); and
   for a retransmitted MAC PDU: the scheduling and resource allocation information (such as the time and frequency locations of the resource, the adopted modulation and coding scheme, the redundancy version information, the progress SN and the pre-coding information).

A second method: TP1 and TP0 implement PDCP synchronization, and TP2 and TP0 implement PDCP/RLC/MAC synchronization, as shown in Fig. 11-(B).

TP0 sends the PDCP layer data synchronization information to TP1 and TP2, and sends the RLC/MAC layer data synchronization information to TP2. TP1 and TP0 implement PDCP synchronization, and TP2 and TP0 implement PDCP/RLC/MAC synchronization. Contents of each piece of synchronization information and a data synchronization method refer to descriptions in the first method.

How to solve interference and mobility problems by the methods provided by the embodiment will be described below with an example.

For the first method (see Fig. 11-(A)), the terminal moves from a location close to TP0 and TP2 to a location close to TP1 and TP2. TP0, TP1 and TP2 implement PDCP/RLC/MAC layer data synchronization.

At the location close to TP0 and TP1, TP0, and TP2 provide data transmission service for the terminal, and perform signal JP to solve the interference problem. Signal JP includes: signal JT, that is, TP0 and TP2 send the same MAC data, and physical signals are coherently superposed or non-coherently superposed at the terminal to improve strength of a received signal to resist interference; or the TP with highest signal quality is dynamically selected from TP0 and TP2 to serve the terminal by Dynamic Point Selection (DPS).

When the terminal moves to the location close to TP1 and TP2, the signal of TP0 is gradually weakened, and the signal of TP1 is gradually strengthened. At this moment, TP0 indicates TP1 and TP2 to provide service for the terminal by adopting a signal JP manner.

For the second method (see Fig. 11-(B)), the terminal moves from the location close to TP0/TP2 to the location close to TP1 and TP2. TP0, and TP2 implement the data synchronization at PDCP/RLC/MAC layer, and TP0/TP1 implement PDCP layer data synchronization.

At the location close to TP0 and TP2, TP0 and TP1 provide the data transmission service for the terminal, and perform signal JP to solve the interference problem. When the terminal moves to the location close to TP1 and TP2, if TP1 is selected to continue providing the service for the terminal, TP0 resets own RLC/MAC layer, and indicates an RLC/MAC layer of the terminal to be reset (including RLC/MAC parameter resetting and discard of an RLC/MAC data packet related to PDCP PDU2). TP0 indicates TP1 to continue transmitting a PDCP PDU corresponding to a discarded RLC/MAC data packet. TP1 encapsulates the corresponding PDCP PDU according to own RLC/MAC configuration parameter, and starts sending data to the terminal. Or, TP0 still keeps the connection with the terminal and continues transmitting the incompletely sent RLC/MAC layer at the same time of indicating TP1 to provide the service for the terminal (at this moment, TP0/TP1 simultaneously provide service for the terminal).

### Embodiment four

Fig. 12 is a schematic diagram of obtaining virtual cell data to implement data synchronization by TPs in a MAC packet forwarding manner according to an embodiment of the present disclosure. As shown in Fig. 12, transmission points TP0, TP1 and TP2 (as shown in Fig. 12) form a virtual cell of a terminal. TP0 is a master TP, and obtains data from a GW through a wired backhaul (TP1 and TP2 may be connected with the GW through the wired backhaul, and may also not be connected with the GW). TP0 encapsulates the data from the GW in PDCP/RLC/MAC layers to form a MAC PDU. TP0 sends the MAC PDU and scheduling and resource allocation information to TP1 and TP2 to implement data synchronization between P0, TP1 and TP2 by virtue of a wireless backhaul.

TP0 may forward a data packet in a broadcast manner, and may also send the data packet to TP1 and TP2 in a unicast manner respectively. How to solve interference and mobility problems by a data synchronization method provided by the example will be described below with an example.

As shown in Fig. 12-(A), the terminal moves from a location close to TP0 to a location close to TP1. At the location close to TP0, TP0 provides service for the terminal (data and related scheduling and resource allocation information are sent), MAC PDU0 has been correctly received, and MAC PDU1 is being retransmitted. When the terminal moves to the location close to TP1, TP0 indicates TP1 to provide service for the terminal, and TP1 continues sending a retransmitted packet of MAC PDU1. In addition, when TP1 provides the service for the terminal, the resource allocation and scheduling information may be sent to the terminal by TP0, and may also be sent to the terminal by TP1.

As shown in Fig. 12-(B), the terminal moves from the location close to TP0 to the location close to TP1. At the location close to TP0, TP0 provides the service for the terminal (the data and the related scheduling and resource allocation information are sent), MAC PDU0 has been correctly received, and MAC PDU1 is being retransmitted. When the terminal moves to TP1, TP0 indicates TP1 to provide the service for the terminal. For improving receiving quality of a signal and resisting interference, TP0/TP1 simultaneously provide the service for the terminal to continue sending the retransmitted packet of MAC PDU1 by adopting a signal JP manner.

### Embodiment five

Transmission points TP0, TP1 and TP2 form a virtual cell of a terminal. TP0 is a master TP, and obtains data from a GW through a wired backhaul (TP1 and TP2 may be connected with the GW through the wired backhaul, and may also not be connected with the GW). TP0 encapsulates (including operations of ciphering and the like) the data from the GW in a PDCP layer to form a PDCP PDU. TP0 sends the PDCP PDU to TP1 and TP2 to implement data synchronization between P0, TP1 AND TP2 by virtue of a wireless backhaul, and sends RLC/MAC layer data synchronization information to TP2. TP2 encapsulates the PDCP PDU to obtain an RLC/MAC PDU according to the RLC/MAC layer data synchronization information (the RLC/MAC layer data synchronization information and a synchronization method refer to Embodiment three).

According to the data synchronization method of the embodiment, TP0/TP1 may implement PDCP layer data synchronization, and TP0/TP2 may implement PDCP/RLC/MAC layer data synchronization. The method for solving the mobility and interference pproblem refers to Embodiment three.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present disclosure is not limited to any specific hardware and software combination.

The above is only the preferred embodiment of the present disclosure and not intended to limit the scope of protection of the present disclosure. For those skilled in the art, the present disclosure may have various modifications and variations. Any modifications, equivalent replacements, improvements and the like made within the spirit and principle of the present disclosure shall fall within the scope of protection of the present disclosure.

### Industrial Applicability

As mentioned above, by the embodiments and the preferred implementation modes, the problem of how to control data synchronization overhead on the premise of ensuring a cell virtualization effect in the related technology is solved, and an effect of flexibly regulating and controlling a number of layers which implement data synchronization according to a cell virtualization requirement to control the data synchronization overhead and implementation complexity on the premise of ensuring the cell virtualization effect is further achieved.

## Claims

1. A method for data synchronization, comprising:
sending, by a master Transmission Point (TP), signaling and/or a forwarded packet to M+N slave TPs; and
performing downlink data synchronization with the slave TPs by sending the signaling and/or the forwarded packet, wherein M slave TPs perform Packet Data Convergence Protocol (PDCP) layer data synchronization with the master TP, N slave TPs perform PDCP/Radio Link Control (RLC)/Medium Access Control (MAC) layer data synchronization with the master TP, M>=0, N>=0 and M+N>=1.

2. The method according to claim 1, wherein PDCP layer data synchronization is that the slave TPs and the master TP have the same PDCP Protocol Data Unit (PDU).

3. The method according to claim 2, wherein PDCP layer data synchronization is performed in at least one of the following manners:
a data packet forwarding manner, wherein the data packet forwarding manner comprises that: the master TP sends the PDCP PDU to the slave TPs; and
a signaling manner, wherein the signaling manner comprises that: the master TP sends PDCP layer data synchronization information to the slave TPs, the data synchronization information being used for the slave TPs to encapsulate a PDCP Service Data Unit (SDU) to form the PDCP PDU.

4. The method according to claim 3, wherein the PDCP layer data synchronization information comprises at least one of:
header compression information, ciphering information, a PDCP header, a PDCP data packet Sequence Number (SN), a super-frame number and a maximum data packet SN.

5. The method according to claim 1, wherein PDCP/RLC/MAC layer data synchronization is that the slave TPs and the master TP have the same PDCP, RLC and MAC PDUs, or have the same MAC PDU.

6. The method according to claim 5, wherein that the slave TPs and the master TP have the same PDCP, RLC and MAC PDUs is implemented in at least one of the following manners:
the signaling manner, wherein the signaling manner comprises that: the master TP sends data synchronization information of PDCP, RLC and MAC data to the slave TPs, the PDCP, RLC and MAC layer data synchronization information being used for the slave TPs to encapsulate PDCP, RLC and MAC SDUs to form the PDCP, RLC and MAC PDUs; and
a combined signaling and packet forwarding manner, wherein the combined signaling and packet forwarding manner comprises that: the master TP transmits the PDCP PDU to the slave TPs and sends the RLC/MAC layer data synchronization information to the slave TPs, the data synchronization information being used for the slave TPs to form the RLC and MAC PDUs, or the master TP sends the PDCP SDU to the slave TPs and sends the PDCP/RLC/MAC layer data synchronization information to the slave TPs, the data synchronization information being used for the slave TPs to form the PDCP, RLC and MAC PDUs.

7. The method according to claim 6, wherein at least one of the following is comprised:
the PDCP layer data synchronization information comprises at least one of: the header compression information, the ciphering information, the PDCP header, the PDCP data packet SN, the super-frame number and the maximum data packet SN;
the RLC layer data synchronization information comprises at least one of: an RLC sending buffer status and an RLC PDU header; and
the MAC layer data synchronization information comprises at least one of: scheduling and resource allocation information, a MAC header, a MAC Control Element (CE) and a corresponding relationship between a sub-header in the MAC header and an SN of a MAC SDU.

8. The method according to claim 5, wherein PDCP/RLC/MAC layer data synchronization which is that the MAC PDU is the same is implemented in the packet forwarding manner, comprising that: the master TP sends the MAC PDU to the salve TPs.

9. The method according to claim 1, wherein PDCP layer data synchronization comprises:
performing, by the slave TPs and the master TP, PDCP synchronization at first, and then performing RLC/MAC layer data synchronization.

10. The method according to claim 9, wherein, after PDCP synchronization is performed, the master TP notifies the slave TPs of performing RLC/MAC layer data synchronization through signaling.

11. The method according to claim 1, wherein PDCP layer data synchronization comprises at least one of:
indicating, by the master TP, a node to send a data packet to the salve TPs;
indicating, by the master TP, the slave TPs to receive data from the node; and
indicating, by the master TP, the slave TPs to send data requests to the node, making, by the slave TPs, the data sending requests to the node, and sending, by the node, the data to the slave TPs.

12. The method according to claim 11, wherein
when the master TP indicates the node to send the data packet to the slave TPs, the master TP sends tag information of the slave TPs to the node;
when the master TP indicates the slave TPs to receive the data from the node, the master TP sends tag information of the data packet to the slave TPs; and
when the master TP indicates the slave TPs to send the data requests to the node, the slave TPs send the data sending requests to the node and the node sends the data to the slave TPs, the slave TPs send the tag information of the requested data packet to the node.

13. The method according to claim 12, wherein
when the master TP indicates the node to send the data packet to the slave TPs, the slave TPs detect whether the data packet from the node comprises the tag information corresponding to the slave TPs.

14. The method according to claim 12, wherein the tag information of the data packet comprises at least one of: a virtual cell tag, a connecting tag and a User Equipment (UE) tag.

15. The method according to claim 11, wherein the node is a Gate Way (GW) or a TP.

16. The method according to any one of claims 1-15, wherein the TP comprises at least one of: a macro Evolved Node B (eNB), a pico, a Remote Radio Head (RRH) and a femto.

17. A method for data synchronization, comprising:
receiving, by slave Transmission Points (TPs), signaling and/or forwarded packet sent by a master TP; and
performing downlink data synchronization with the master TP by receiving the signaling and/or the forwarded packet, wherein M slave TPs perform Packet Data Convergence Protocol (PDCP) layer data synchronization with the master TP, N slave TPs perform PDCP/Radio Link Control (RLC)/Medium Access Control (MAC) layer data synchronization with the master TP, M>=0, N>=0 and M+N>=1.

18. The method according to claim 17, wherein PDCP layer data synchronization is that the slave TPs and the master TP have the same PDCP Protocol Data Unit (PDU).

19. The method according to claim 18, wherein PDCP layer data synchronization is performed in at least one of the following manners:
a data packet forwarding manner, wherein the data packet forwarding manner comprises that: the slave TPs receive the PDCP PDU sent by the master TP; and
a signaling manner, wherein the signaling manner comprises that: the slave TPs receive PDCP layer data synchronization information sent by the master TP, and the slave TPs encapsulate a PDCP Service Data Unit (SDU) to form the PDCP PDU according to the data synchronization information.

20. The method according to claim 19, wherein the PDCP layer data synchronization information comprises at least one of:
header compression information, ciphering information, a PDCP header, a PDCP data packet Sequence Number (SN), a super-frame number and a maximum data packet SN.

21. The method according to claim 17, wherein PDCP/RLC/MAC layer data synchronization is that the slave TPs and the master TP have the same PDCP, RLC and MAC PDUs, or have the same MAC PDU.

22. The method according to claim 21, wherein that the slave TPs and the master TP have the same PDCP, RLC and MAC PDUs is implemented in at least one of the following manners:
the signaling manner, wherein the signaling manner comprises that: the slave TPs receive data synchronization information of PDCP, RLC and MAC data from the master TP, and the slave TPs encapsulate PDCP, RLC and MAC SDUs to form the PDCP, RLC and MAC PDUs according to the PDCP, RLC and MAC layer data synchronization information; and
a combined signaling and packet forwarding manner, wherein the combined signaling and packet forwarding manner comprises that: the slave TPs receive the PDCP PDU and RLC/MAC layer data synchronization information transmitted by the master TP, and the slave TPs form the RLC and MAC PDUs according to the data synchronization information, or the slave TPs receive the PDCP SDU and PDCP/RLC/MAC layer data synchronization information sent by the master TP, and form the PDCP, RLC and MAC PDUs according to the data synchronization information.

23. The method according to claim 22, wherein at least one of the following is comprised:
the PDCP layer data synchronization information comprises at least one of: the header compression information, the ciphering information, the PDCP header, the PDCP data packet SN, the super-frame number and the maximum data packet SN;
the RLC layer data synchronization information comprises at least one of: an RLC sending buffer status and an RLC PDU header; and
the MAC layer data synchronization information comprises at least one of: scheduling and resource allocation information, a MAC header, a MAC Control Element (CE) and a corresponding relationship between a sub-header in the MAC header and an SN of a MAC SDU.

24. The method according to claim 21, wherein PDCP/RLC/MAC layer data synchronization which is that the MAC PDU is the same is implemented in the packet forwarding manner, comprising that: the slave TPs receive the MAC PDU sent by the master TP.

25. The method according to claim 17, wherein PDCP layer data synchronization comprises:
performing, by the slave TPs and the master TP, PDCP synchronization at first, and then performing RLC/MAC layer data synchronization.

26. The method according to claim 25, wherein, after PDCP synchronization is performed, the slave TPs perform RLC/MAC layer data synchronization according to a signaling notice of the master TP.

27. The method according to claim 17, wherein PDCP layer data synchronization comprises at least one of:
indicating, by the master TP, a node to send a data packet to the salve TPs;
indicating, by the master TP, the slave TPs to receive data from the node; and
indicating, by the master TP, the slave TPs to send data requests to the node, making, by the slave TPs, the data sending requests to the node, and sending, by the node, the data to the slave TPs.

28. The method according to claim 27, wherein
the slave TPs detect whether the data packet from the node comprises own corresponding tag information or not;
the slave TPs receive the data from the node according to an indication of the master TP; and
the slave TPs make the data sending requests to the node according to an indication of the master TP, and receive the data sent by the node.

29. The method according to claim 28, wherein
when the slave TPs receive the data from the node according to the indication of the master TP, the slave TPs receive the data packet according to tag information of the data packet sent by the master TP; and
when the slave TPs make the data sending requests to the node according to the indication of the master TP, the slave TPs send the tag information of the data packet to the node.

30. The method according to claim 28, wherein the tag information of the data packet comprises at least one of:
a virtual cell tag, a connecting tag and a User Equipment (UE) tag.

31. The method according to claim 27, wherein the node is a Gate Way (GW) or a TP.

32. The method according to any one of claims 17-31, wherein
the TP comprises at least one of: a macro Evolved Node B (eNB), a pico, a Remote Radio Head (RRH) and a femto.

33. A device for data synchronization, located in a master Transmission Point (TP) and comprising:
a sending module, configured to send signaling and/or a forwarded packet to M+N slave TPs; and
a first synchronization module, configured to perform downlink data synchronization with the slave TPs by sending the signaling and/or the forwarded packet, wherein M slave TPs perform Packet Data Convergence Protocol (PDCP) layer data synchronization with the master TP, N slave TPs perform PDCP/Radio Link Control (RLC)/Medium Access Control (MAC) layer data synchronization with the master TP, M>=0, N>=0 and M+N>=1.

34. A device for data synchronization, located in a slave Transmission Point (TP) and comprising:
a receiving module, configured to receive signaling and/or forwarded packet sent by a master TP; and
a second synchronization module, configured to perform downlink data synchronization with the master TP by receiving the signaling and/or the forwarded packet, wherein M slave TPs perform Packet Data Convergence Protocol (PDCP) layer data synchronization with the master TP, N slave TPs perform PDCP/Radio Link Control (RLC)/Medium Access Control (MAC) layer data synchronization with the master TP, M>=0, N>=0 and M+N>=1.
